# EUROPÄISCHE PATENTSCHRIFT

(11) **EP 0 344 348 B1**
(45) Veröffentlichungstag und Bekanntmachung des Hinweises auf die Patenterteilung: **01.12.1993**
(21) Anmeldenummer: 88108836.3
(22) Anmeldetag: 02.06.1988
(51) Int. Cl.: B26D 7/06, B02C 18/18

(54) **Rundlaufendes Schneidwerkzeug, insbesondere zum Stranggranulieren von Kunststoffen**
Rotating cutter for granulating plastics
Couteaux rotatifs pour la granulation des matériaux plastiques

(43) Veröffentlichungstag der Anmeldung: 06.12.1989
(73) Patentinhaber: Hench, Hans, D-79594 Inzlingen (DE)
(72) Erfinder: Hench, Hans, D-79594 Inzlingen (DE)
(74) Vertreter: Rüger, Rudolf, Dr.-Ing.

(56) Entgegenhaltungen:
- EP-A- 0 096 083
- EP-A- 0 182 037
- EP-A- 0 266 447
- CH-A- 419 807
- DE-A- 2 724 464
- DE-A- 3 301 919

## Beschreibung

Die Erfindung betrifft ein rundlaufendes Schneidwerkzeug, insbesondere zum Stranggranulieren von Kunststoffen, mit den Merkmalen des Oberbegriffes des Patentanspruches 1.

Die aus Stellit oder Hartmetall bestehenden Schneidelemente eines solchen Schneidwerkzeuges sind beim Stranggranulieren, insbesondere von füllstoffhaltigen Kunststoffen hohen Beanspruchungen unterworfen. Es geht deshalb der Wunsch dahin, die Schneidwerkzeuge mit austauschbaren Schneidelementen auszubilden.

Ein solches Schneidwerkzeug ist beispielsweise aus der DE-C- 34 39 029 bekannt. Die am Umfang des Werkzeugkörpers angeordneten Klemmeinrichtungen sind dabei derart ausgebildet, daß deren Längsnuten unmittelbar in dem massiven Werkzeugkörper angeordnet und mit einander gegenüberliegenden aufeinander zu weisenden Klemmflächen ausgebildet sind. Die Schneidelemente tragen im Fußbereich den Klemmflächen zugeordnete, entsprechend gestaltete Abstützflächen, mit denen sie auf den Klemmflächen lagerichtig formschlüssig abgestützt sind. Die Spannvorrichtung weist als Klemmkörper Kugeln auf, durch die die Schneidelemente im wesentlichen in radialer Richtung gegen den Werkzeugkörper verspannt sind.

Auf diese Weise läßt sich eine sehr wirksame formschlüssige und lösbare Verspannung in dem Werkzeugkörper erzielen, doch fallen bei einem Schneidelementenaustausch die als Klemmkörper dienenden Kugeln lose an, was gelegentlich unerwünscht ist.

Bei einer aus der entsprechenden EP-A1-0 182 037 bekannten abgewandelten Ausführungsform dieses Schneidwerkzeuges sind deshalb die Kugeln schon durch Klemmkörper in Gestalt zylindrischer Spannhülsen ersetzt worden, die über einen Teil ihrer Länge geschlitzt und im Bereich ihrer Bohrung mit innenliegenden keilförmigen oder konischen Spannflächen ausgebildet sind, welche gegen eine in die Bohrung eingeschraubte Spannschraube abgestützt sind. Diese Schneidelementespannung ist ebenfalls sehr wirksam, doch ist das Ein- und Herausschrauben der Spannschrauben mit einer gewissen Mühe verbunden; es erfordert auch eine gewisse Sorgfalt.

Einfache Verhältnisse weist insoweit ein aus der die Merkmale des Oberbegriffes des Patentanspruches 1 enthaltenden DE-A-3 301 919 bekanntes rundlaufendes Schneidwerkzeug mit einem zylindrischen Werkzeugkörper auf, der eine Anzahl in Umfangsrichtung gleichmäßig verteilt angeordneter Klemmeinrichtungen zur Aufnahme von sich im wesentlichen über die axiale Länge des Werkzeugkörpers erstreckenden länglichen Schneidelementen enthält. Jedes der Schneidelemente ist in einer Längsnut der zugeordneten Klemmeinrichtung angeordnet und gegen Klemmflächen im Bereich der einander gegenüberliegenden seitenwänden der Längsnut durch jeweils eine Spannvorrichtung lösbar verspannt. Jede Spannvorrichtung umfaßt ein drehbar gelagertes Spannelement mit arretierbaren Exzentermitteln in Gestalt eines besonders gestalteten Exzenternockens, der in einer entsprechenden Ausnehmung des Werkzeugkörpers drehbar gelagert ist.

Allen vorgenannten Werkzeugen ist gemeinsam, daß bei einer Abnutzung oder Beschädigung des Werkzeugkörpers im Bereiche der Klemmeinrichtungen oder der Spannvorrichtungen das ganze Werkzeug unbrauchbar wird, weil keine wirksame Spannung der Schneidelemente mehr gewährleistet ist.
Um dies zu verhindern, sind bei einen aus der EP-A-0 266 447 bekannten rundlaufenden Schneidwerkzeug die die Schneidelemente aufnehmenden Längsnuten jeweils in Aufnahmeelementen in Gestalt länglicher Schneidelemententräger angeordnet, die mit dem Werkzeugkörper verbunden oder Teile desselben bildend angeordnet sind. Diese schienen- oder leistenförmigen Schneidelemententräger sind in randoffene Nuten des insbesonderen nach Art eines sogenannten Rotors ausgebildeten Werkzeugkörpers eingesetzt, die im Bereiche ihres Bodens mit Gewindebohrungen zur Aufnahme von Befestigungsschrauben für den Schneidelemententräger versehen sind. Schon mit Rücksicht auf die hier verwendeten Spannmittel für die Schneidelemente sind die Schneidelemententräger verhältnismäßig schwer und aufwendig, wobei die Handhabung bei der Montage und beim Schneidelementenwechsel nicht ganz einfach ist.

Aufgabe der Erfindung ist es deshalb, ein Schneidwerkzeug der eingangs genannten Art zu schaffen, das sich durch eine besonders einfach zu bedienende, aber dennoch sehr wirksame Spannung der Schneidelemente auszeichnet.

Zur Lösung dieser Aufgabe weist das Schneidwerkzeug erfindungsgemäß die Merkmale des kennzeichnenden Teiles das Patentanspruchs 1 auf.

Die Exzentermittel erlauben es, durch entsprechende Wahl der Exzentrizität und entsprechende Ausbildung der Spannelemente sehr hohe Spannkräfte bei einfacher Bedienung zu erzielen. Da die Klemmeinrichtungen an länglichen Aufnahmeelementen ausgebildet sind, können bedarfsgemäß einfach die Aufnahmeelemente ausgetauscht werden. Auch ergeben sich für eine Reihe von Einsatzfällen vorteilhafte Ausführungsformen mit solchen vormontierten Einheiten.

In einer bevorzugten Ausführungsform ist die Anordnung derart getroffen, daß jedes Spannelement ein in der Nähe der zugeordneten Längsnut der jeweiligen Klemmeinrichtung drehbar gelagertes Exzenterteil aufweist, das in einer Klemmstellung selbsthemmend mit wenigstens einer Anlagefläche an dem jeweiligen Schneidelement oder einem auf dieses einwirkenden Klemmteil verkeilt ist. Das drehbar gelagerte Spannelement bedarf somit zur Spannung des zugeordneten Schneidelementes lediglich einer nur einen Bruchteil einer Umdrehung ausmachenden Betätigungsbewegung. Das Spannelement selbst ist einfach ausgebildet und erlaubt es, auf Gewinde u.dgl. empfindliche Teile vollständig zu verzichten.

Grundsätzlich ist es möglich, die Schneidelemente in den Längsnuten lediglich reibschlüssig zu verklemmen, doch ist es in der Regel von Vorteil, wenn die Schneidelemente in den Längsnuten an den Klemmflächen lagerichtig formschlüssig abgestützt sind. Dabei kann in einer Ausführungsform bei jeder Längsnut das Exzenterteil des Spannelementes zweckmäßigerweise unmittelbar auf eine im Fußbereich des in die Längsnut eingesetzten Schneidelementes vorgesehene Anlagefläche einwirkend angeordnet sein, wobei es sich als vorteilhaft erwiesen hat, wenn jede Längsnut wenigstens auf der in Drehrichtung hinten liegenden Seite eine gegenüber der Radialrichtung geneigte Klemmfläche aufweist, gegen die das Schneidelement durch das Spannelement angepreßt ist. Durch die so bewirkte Abstützung des Spannelementes am Rücken wird eine besonders günstige und wirksame Aufnahme der an dem Schneidelement angreifenden Schneidkräfte sichergestellt. Im übrigen kann jede Längsnut radial nach außen zu aufeinander zuweisend geneigte Seitenflächen aufweisen, denen an dem Schneidelement angeformte, entsprechend geneigte Anlagebereiche zugeordnet sind, über die das Schneidelement, wie bereits erwähnt, formschlüssig abgestützt ist.

Während diese unmittelbar am Fußbereich des Schneidelementes angreifende Ausbildung und Anordnung des Spannelementes in der Regel eine besondere Gestaltung des Schneidelementes in seinem Fußbereich erfordert, ist es häufig erwünscht, mit einfach gestalteten Schneidelementen das Auslangen finden zu können, wobei es besonders wirtschaftlich ist, wenn, wie dies bei einer Ausführungsform des erfindungsgemäßen Schneidwerkzeuges vorgesehen ist, die Schneidelemente als Wendeschneidelemente mit zumindest zwei nacheinander abarbeitbaren Schneiden ausgebildet sind.

Insbesondere für solche, eine einfachere geometrische Gestalt aufweisende Schneidelemente ist es von Vorteil wenn jede Längsnut auf einer Seite über zumindest einem Teil ihrer Länge durch ein die zugeordnete Klemmfläche enthaltendes Klemmteil begrenzt ist, das begrenzt beweglich an dem Aufnahmeelement angeordnet und auf der der Längsnut abgewandten Seite gegen das Exzenterteil des Spannelementes abgestützt ist. Das Klemmteil kann an dem Aufnahmeelement insbesondere über einen elastisch verformbaren Bereich einstückig angeformt sein, wobei es mit Vorteil auf der in Drehrichtung hinten liegenden Seite der jeweiligen Längsnut angeordnet ist. Dabei kann es einseitig durch eine längsgeschlitzte Bohrung begrenzt sein, in die das Spannelement drehbar eingesetzt ist, womit sich besonders einfache Herstellungsmöglichkeiten ergeben. Die Lagermittel für die Aufnahmeelemente weisen in einer einfachen Ausführungsform der Erfindung Lagerplatten oder -armsterne auf, die mit Einrichtungen zur gegenseitigen Verbindung axial nebeneinander angeordneter Werkzeugkörper und/oder mit einer Lagerachse oder Teilen einer solchen versehen sind.

Bei einer solchen vorteilhaften Ausführungsform können die Aufnahmeelemente in Gestalt von im Querschnitt zumindest teilweise zylindrischen Aufnahmebolzen ausgebildet sein, von denen jeder eine durchlaufende Längsnut und eine dieser zugeordnete Spannvorrichtung enthält. Diese Aufnahmebolzen sind zwischen den beiden stirnseitigen Lagerplatten oder -armsternen parallel zueinander ausgerichtet gespannt, so daß sich insgesamt eine käfigartige Gestaltung des ganzen Werkzeugkörpers ergibt. Die Zwischenräume zwischen den benachbarten Aufnahmebolzen und den in diese eingesetzten Schneidelemente erlauben es, am Umfang des Werkzeugkörpers an mehreren, in Umfangsrichtung gegeneinander versetzten Stellen zu granulierende Stränge aus thermoplastischen Kunststoffen etc. zuzuführen und zu granulieren und auf diese Weise eine entsprechend erhöhte Ausnutzung des Werkzeuges und demgemäß erhöhte Granulierdurchsatzleistung ohne die bisher notwendige Verlängerung des Schneidwerkzeuges in Achsrichtung zu erzielen. Die an den oberhalb der Horizontalen liegenden Schneidstellen längs des Umfanges des Schneidwerkzeuges anfallenden Granulate können durch den "Käfig" des Schneidwerkzeuges durchfallen und in einem darunter angeordneten Hauptauffangschacht aufgefangen werden.

Schließlich ist es noch vorteilhaft, wenn an dem Aufnahmeelement im Bereiche jeder Längsnut zumindest die radiale Lage des jeweils eingesetzten Schneidelementes maßhaltig bestimmende Anschlagmittel angeordnet sind, die die Montage der Schneidelemente und das Überschleifen des Schneidwerkzeuges vor dem Einsatz wesentlich erleichtern und vereinfachen. Außerdem kann es zweckmäßig sein, wenn zur Erzielung der notwendigen Arbeitsbreite ein solches Schneidwerkzeug als Schneidwalze ausgebildet zumindest zwei axial miteinander verbundene koaxiale Werkzeugkörper mit jeweils eigenen Klemmeinrichtungen und Exzentermitteln aufweist.

In der Zeichnung sind Ausführungsbeispiele des Gegenstandes der Erfindung dargestellt, wobei die Ausführungsform des Schneidwerkzeuges nach den Fig. 1 - 4 von der Erfindung nicht abgedeckt ist. Es zeigen:
- Fig. 1: ein Schneidwerkzeug zur Veranschaulichung des Spannprinzips der Schneidelemente, in einer Seitenansicht,
- Fig. 2: das Schneidwerkzeug nach Fig. 1 in einem Ausschnitt im Bereiche zweier aufeinanderfolgender Schneidelemente im Querschnitt und in einem anderen Maßstab,
- Fig. 3: das Schneidwerkzeug nach Fig. 1, geschnitten längs der Linie III-III der Fig. 1 in einer Seitenansicht, in einer Teildarstellung und in einem anderen Maßstab,
- Fig. 4: das Schneidwerkzeug nach Fig. 1 in einer abgewandelten Ausführungsform im Ausschnitt im Bereiche zweier aufeinanderfolgender Schneidelemente und in einer Seitenansicht,
- Fig. 5: ein Schneidwerkzeug gemäß der Erfindung in einer Ausführungsform mit "käfigartiger" Ausbildung in einer schematischen Seitenansicht, teilweise aufgeschnitten und im Ausschnitt,
- Fig. 6 und 7: zwei Schneidelemente tragende Aufnahmebolzen des Schneidwerkzeugs nach Fig. 5 in einer stirnseitigen Ansicht und in einem anderen Maßstab und
- Fig. 8: das Schneidwerkzeug nach Fig. 5 in einer Seitenansicht, teilweise aufgeschnitten und im Ausschnitt unter Veranschaulichung der beiden verschiedenen Aufnahmebolzen nach Fig. 6 und 7.

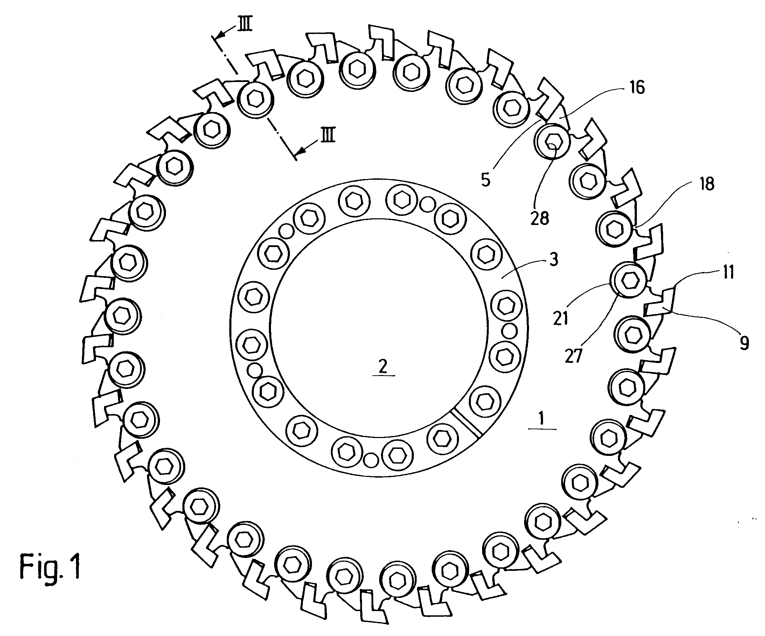

Das in den Fig. 1 bis 3 dargestellte Schneidwerkzeug weist einen massiven zylindrischen Werkzeugkörper 1 aus Stahl auf, der mit einer koaxialen durchgehenden Nabenbohrung 2 versehen ist, in deren Bereich bei 3 angedeutete Ringspannelemente zur drehfesten Verbindung des Werkzeugkörpers 1 mit einer nicht weiter dargestellten Welle vorgesehen sind. Stirnseitig angeordnete Mitnehmerzapfen 4, die in entsprechende stirnseitige Bohrungen eines anschließenden Werkzeugkörpers 1 eingreifen, gestatten es, mehrere der beschriebenen Schneidwerkzeuge zu einer Schneidwalze größerer axialer Länge zusammenzusetzen.

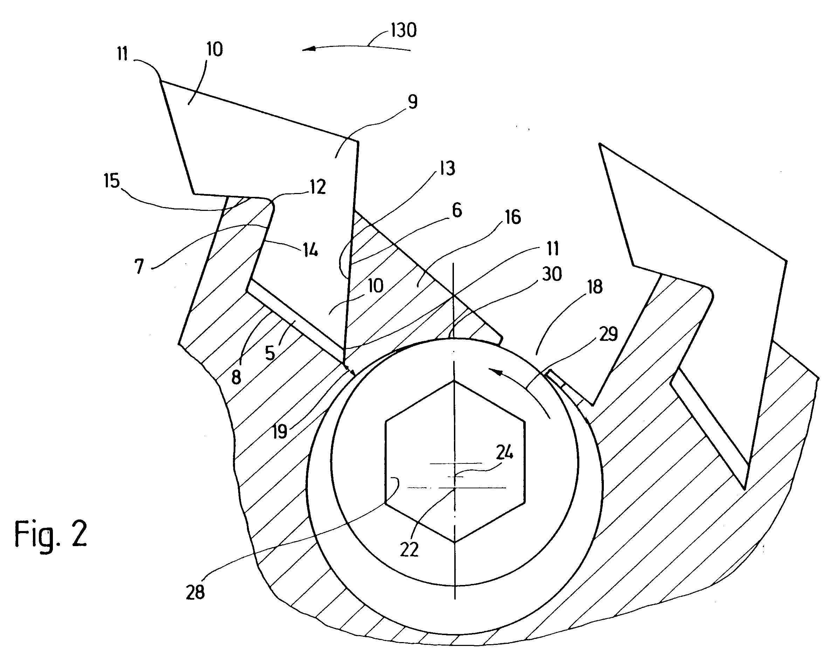

Am Umfang des Werkzeugkörpers 1 sind in gleichen Abständen verteilt angeordnete Längsnuten 5 ausgebildet, die sich über die gesamte axiale Länge des Werkzeugkörpers 1 durchgehend erstrecken und die zu der jeweils zugeordneten, die Drehachse des Werkzeugkörpers 1 enthaltenden Radialebene über die Länge des Werkzeugkörpers unter Einschluß eines Winkels von etwa 3° schräg verlaufen, um damit die Geräuschbildung beim Stranggranuliervorgang zu vermindern. Jede der Längsnuten 5 weist in der aus Fig. 2 ersichtlichen Weise zwei einander gegenüberliegende Nutenseitenwände 6, 7 auf, die von einem mit 8 bezeichneten Nutenboden ausgehen. Die beiden Nutenseitenwände 6, 7 sind in Radialrichtung nach außen zu schräg aufeinander zu weisend geneigt, so daß die schlitzartige Nutenöffnung am Umfang des Werkzeugkörpers 1 schmäler als der Nutenboden 8 ist. In jede dieser Längsnuten 5 ist ein Schneidelement 9 in Achsrichtung eingeschoben, das eine im wesentlichen L-förmige Querschnittsgestalt aufweist und dessen beide Schenkel 10 einen Winkel von etwa 105° miteinander einschließen.

Die Schenkel 10, die endseitig jeweils eine mit 11 bezeichnete, über die axiale Länge des Schneidelementes durchgehende Schneidkante tragen, sind mit einer sich von ihrer Wurzel 12 zu der jeweiligen Schneidkante 11 hin verbreiternden Querschnittsgestalt ausgebildet. Dabei sind die Abmessungen derart gewählt, daß in der aus Fig. 2 zu entnehmenden Weise die Querschnittsgestalt einer Längsnut 5 und eines Schenkels 10 eines der leistenartigen Schneidelemente 9 einander entsprechen, was bedeutet, daß bei eingeschobenem Schneidelement 9 dessen einer Schenkel 10 mit seinen beiden einander gegenüberliegenden äußeren Abstützflächen 13, 14 an den entsprechenden Nutenseitenflächen 6, 7 anliegt und damit wegen seiner keilförmigen Gestalt in der Längsnut 5 in Radialrichtung formschlüssig gehalten ist. Anschließend an die in Drehrichtung 130 vorne liegende Nutenseitenwand 7 ist der Werkzeugkörper 1 an seinem Umfang jeweils mit einem maßhaltigen durchgehenden Anschlag 15 ausgebildet, auf dem der jeweils andere Schenkel 10 des in die Längsnut 5 eingesetzten Schneidelementes 9 aufliegt und der damit die exakt maßhaltige reproduzierbare Lage des Schneidelementes 9 in der Längsnut 5 gewährleistet. Die Tiefe jeder Längsnut 5 ist derart gewählt, daß der in sie eingesetzte Schenkel 10 des Schneidelementes 9 nicht bis zum Nutenboden 8 reicht, wie dies aus Fig. 2 hervorgeht.

Jeder Längsnut 5 ist eine eigene Spannvorrichtung für das in sie eingesetzte Schneidelement 9 zugeordnet. Diese Spannvorrichtung weist Exzentermittel auf, die eine rasche Bedienung von außen her erlauben und in ihrer jeweiligen Klemmstellung arretierbar sind.

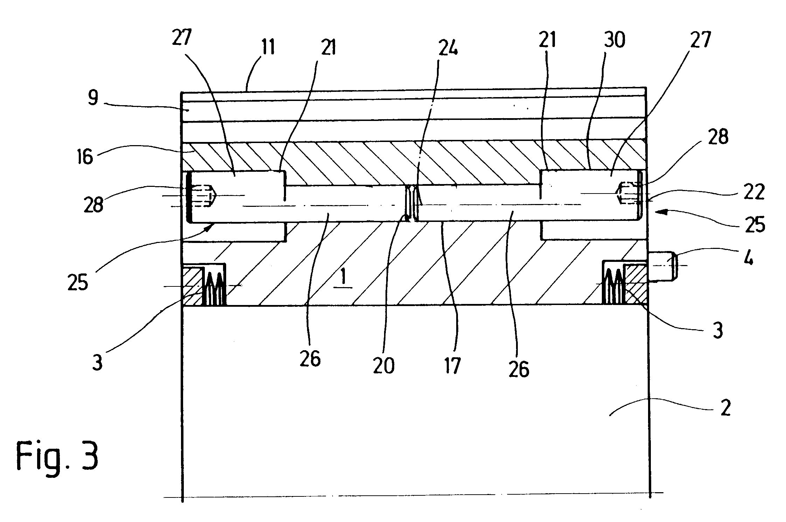

Konstruktiv ist eine solche Spannvorrichtung in den Fig. 1 bis 3 derart ausgebildet, daß auf der in Drehrichtung 130 hinten liegenden Seite jeder Längsnut 5 ein über die Länge des Werkzeugkörpers 1 durchgehendes Klemmteil 16 ausgebildet ist, das auf der einen Seite durch die entsprechende Nutenseitenwand 6 und auf der anderen Seite durch eine durchgehende Stufenbohrung 17 (Fig. 3) begrenzt ist. In die Stufenbohrung 17 führt von außen her ein durchgehender Längsschlitz 18 (Fig. 2), der bewirkt, daß das so begrenzte Klemmteil 16 um seinen schmalen Wurzelbereich 19 begrenzt elastisch verschwenkbar ist.

Die achsparallele durchgehende Stufenbohrung 17 weist einen innenliegenden ersten zylindrischen Bohrungsteil 20 auf, an den sich im Bereiche beider Stirnseiten des Werkzeugkörpers 1 jeweils eine exzentrische Sackbohrung oder Ausdrehung 21 größeren Durchmessers anschließt, deren Achse 22 (Fig. 3) gegenüber der Achse 24 des ersten Bohrungsteiles 20 mit Bezug auf das Klemmteil 16 zu in der aus Fig. 2 zu entnehmenden Weise versetzt ist. In die Stufenbohrung 17 sind von beiden Stirnseiten her zwei gleichgestaltete, in der Stufenbohrung 17 drehbar gelagerte Exzenter-Spannelemente 25 eingesetzt, die Teile der Spannvorrichtung bilden.

Jedes der Spannelemente 25 weist ein in dem ersten Bohrungsteil 20 drehbar gelagertes zylindrisches Lagerteil 26 auf, an das sich stirnseitig ein Exzenterteil 27 größeren Durchmessers anschließt, das mit axialem Spiel in dem zweiten Bohrungsteil 21 liegt. Ein in dem Exzenterteil 27 angeordneter Innensechskant 28 gestattet es, das Spannelement um die Drehachse 24 zu verdrehen.

Wird nach dem Einsetzen des Schneidelementes 9 in die Längsnut 5 bei mit ihrer Exzentrizität etwa unter dem Längsschlitz 18 stehenden und damit gelösten Spannelementen 25 jedes der beiden der Längsnut 5 zugeordneten Spannelemente 25 in Pfeilrichtung 29 (Fig. 2) verdreht, so wird dadurch das sich über eine einen Teil der Wand der jeweiligen Bohrung 21 bildende Anlagefläche 30 gegen das Exzenterteil 27 abstützende Klemmelement 16, bezogen auf Fig. 2, um seine Wurzel 19 im Gegenuhrzeigersinne verschwenkt, mit dem Ergebnis, daß die als Klemmflächen wirkenden Nutenseitenwände 6, 7 den zugeordneten Schenkel 10 an seinen Abstützflächen 13, 14 in der Längsnut 5 lagefest verspannen.

Um eine solche sichere Verspannung zu erzielen, genügt es, die beiden Spannelemete 25 um einen Bruchteil einer Umdrehung zu drehen. Die geometrischen Verhältnisse sind dabei derart gewählt, daß zwischen der Umfangsfläche des Exzenterteiles 27 und der zugehörigen Anlagefläche 30 im gespannten Zustand Selbsthemmung auftritt, womit das Spannelement lagefest arretiert ist.

Zum Auswechseln eines Schneidelementes 9 brauchen lediglich die beiden zugeordneten Spannelemente 25 im Gegendrehsinn aus der Klemmstellung nach Fig. 2 so weit zurückgedreht werden, daß das Exzenterteil 27 der beiden Spannelemente 25 die Anlagefläche 30 freigibt, womit das Klemmteil 16 unter der Wirkung seiner Eigenelastizität wieder in die Lösestellung zurückkehrt.

Die aus Hartmetall, Schnellstahl oder Stellit bestehenden Schneidelemente 9 sind als Wendeschneidelemente ausgebildet, d.h. sie können wahlweise mit jedem ihrer beiden Schenkel 10 in der beschriebenen Weise in eine Längsnut 5 eingesetzt werden, so daß ihre beiden Schneidkanten 11 aufeinanderfolgend abarbeitbar sind.

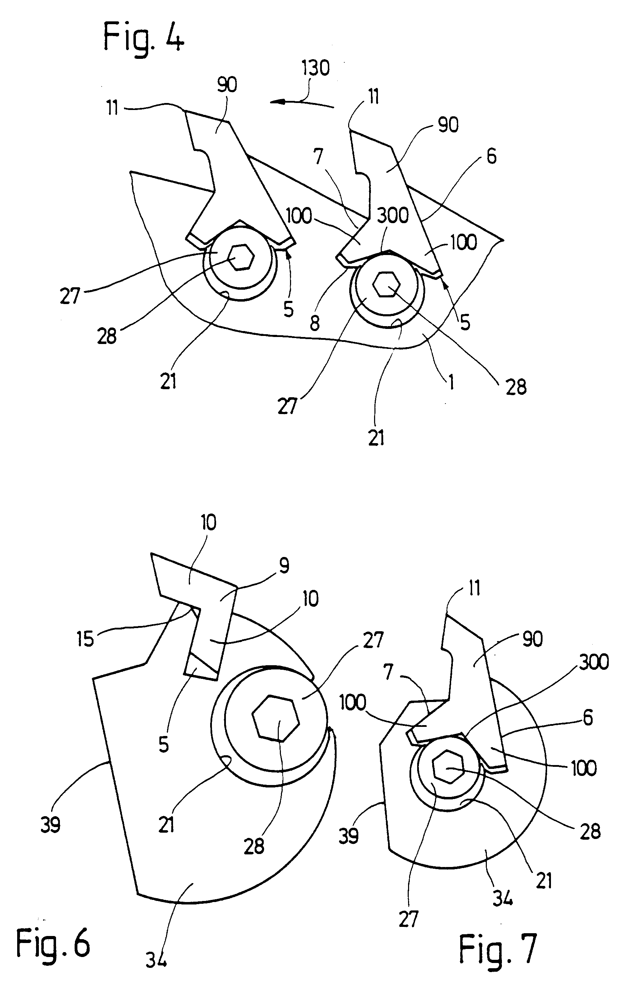

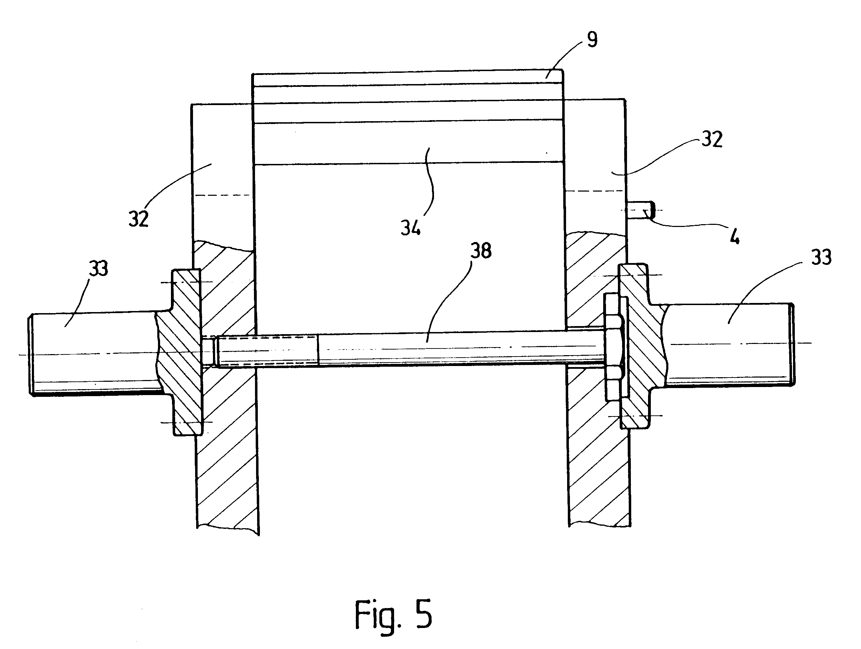

Eine alternative Ausführungsform der Schneidelemente 90 ist in den Fig. 4, 7 veranschaulicht, in denen der beschriebenen Ausführungsform nach den Fig. 1 bis 3 entsprechende Teile mit gleichen Bezugszeichen versehen und nicht nochmals erläutert sind. Die leistenartigen Schneidelemente 90 sind in diesem Falle nicht als Wendeschneidelemente ausgebildet; sie sind in ihrem der Schneidkante 11 gegenüberliegenden Fußbereich mit zwei etwa V-förmig auseinanderstrebenden schrägen Schenkeln 100 versehen, die sich wiederum an den radial nach außen zu aufeinander zu weisend angeordneten Nutenseitenwänden 6, 7 formschlüssig abstützen. Die beiden Schenkel 100 sind auf ihrer Unterseite durch eine dachförmige Anlagefläche 300 begrenzt, deren beide Flächenteile einen Winkel von etwa 120° miteinander einschließen.

Die Stufenbohrung 17 (Fig. 3) ist in diesem Falle unterhalb des Bodens 8 der Längsnut 5 etwa in deren Mitte angeordnet,und zwar derart, daß die zweiten Bohrungsteile 21 zu der Längsnut 5 hin geöffnet sind. Die in die Stufenbohrung 17 von beiden Stirnseiten des Werkzeugkörpers 1 her eingeschobenen Spannelemente 25 liegen somit mit ihren Exzenterteilen 27 unmittelbar an der dachförmigen Anlagefläche 300 des zugeordneten Schneidelementes 90 an. Werden, ausgehend von einer gelösten Stellung, die beiden Spannelemente 25 in ihre Klemmstellung verdreht, so drücken ihre Exzenterteile 27 das zugeordnete Klemmelement 90 gegen die in Drehrichtung 130 hinten liegende Nutenseitenwand 6 an, so daß das Klemmelement 90 auf seiner Rückseite satt abgestützt und verspannt ist.

Auch in diesem Falle sind die Exzenterteile 27 mit der zugeordneten Anlagefläche 300 selbsthemmend gestaltet, was bedeutet, daß die Spannelemente 25 in ihrer Klemmstellung lagefest arretiert sind.

Während bei den beiden beschriebenen Ausführungsformen des Schneidwerkzeuges zur Erläuterung des Spannprinzips die Schneidelemente 9, 90 in Längsnuten 5 eingesetzt sind, die am Umfang eines massiven Werkzeugkörpers 1 ausgebildet sind, ist in den Fig. 5 bis 8 für beide Arten 9, 90 der Schneidelemente eine erfindungsgemässe Ausführungsform gezeigt, bei der das Schneidwerkzeug nach Art eines Stabkäfigs aufgebaut ist.

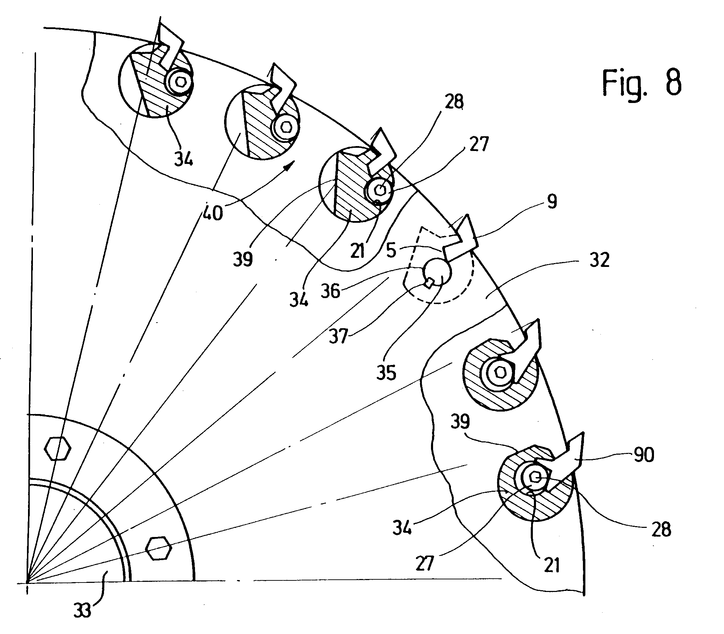

Der Werkzeugkörper 1 besteht in diesem Falle aus zwei koaxialen Flansch- oder Lagerplatten 32, die zueinander koaxiale aufgeschraubte Lagerzapfen 33 tragen, und zwischen denen im Bereiche ihres Umfangs eine Anzahl stab- oder stangenförmiger Aufnahmeelemente 34 angeordnet sind. Die im wesentlichen als im Querschnitt teilzylindrische Bolzen ausgebildeten Aufnahmeelemente 34 sind längs des Umfanges des Schneidwerkzeuges in der aus Fig. 8 ersichtlichen Weise in gleichen Abständen verteilt angeordnet. Sie tragen jeweils ein über ihre Länge durchgehendes Schneidelement 9 oder 90 und sind stirnseitig mit zylindrischen Befestigungszapfen 35 versehen (Fig. 8), mit denen sie in entsprechende Bohrungen 36 der beiden Lagerplatten 32 eingefügt sind, in denen sie bei 37 jeweils drehfest verteilt sind. Die beiden Lagerplatten 32 sind gegeneinander und gegen die Aufnahmeelemente 34 durch einen in Fig. 5 mit 38 bezeichneten Gewinde-Spannbolzen in Achsrichtung verspannt.

In jedem der Aufnahmeelemente 34 ist eine durchgehende Längsnut 5 ausgebildet, der eine Stufenbohrung 17 mit zwei darin drehbar gelagerten Spannelementen 25 zugeordnet ist, wobei, abhängig davon, ob Spannelemente 9 oder 90 eingesetzt werden, die Zuordnung der Spannelemente 25 zu der Längsnut 5 entweder in der aus den Fig. 2, 3 ersichtlichen Weise oder in jener nach Fig. 4 ausgeführt ist. Gleiche Teile sind insoweit wieder gleich wie in den Fig. 2 bis 4 bezeichnet; die Wirkungsweise der Spannung der Schneidelemente 9 bzw. 90 ist wie bereits erläutert und deshalb nicht nochmals beschrieben.

Die käfigartige Ausbildung des Schneidwerkzeuges nach den Fig. 5 bis 8 schafft im Inneren des Werkzeugkörpers 1 und zwischen benachbarten stab- oder bolzenförmigen Aufnahmeelementen 34 Freiräume, durch die Granulat nach unten in einen nicht weiter dargestellten Auffangschacht fallen kann, das von mehreren längs des Umfanges des Schneidwerkzeuges verteilt angeordneten Schneidstellen herrührt, wenn das Schneidwerkzeug in der aus der DE-C-27 24 464 bekannten Weise eingesetzt wird. Dabei werden nämlich dem Schneidelement über mehrere hinsichtlich ihres Einzugwinkels versetzt Zueinander angeordnete Zuführkanäle die zu granulierenden Stränge zugeführt, womit das Schneidwerkzeug an mehreren Stellen ihres Umfangs Schneidarbeit leistet, mit der Folge, daß mit einer geringen axialen Länge des Schneidwerkzeuges das Auslangen gefunden werden kann.

Um einen unbehinderten Durchtritt des Granulats zu gewährleisten, sind die teilzylindrischen Aufnahmeelemente 34 in der aus den Fig. 6, 7 ersichtlichen Weise mit Flächen 39 ausgebildet, die achsparallel ausgerichtet den Aufnahmekörper 34 schneiden und in der aus Fig. 8 zu entnehmenden Weise im montierten Zustand freie Durchtrittsräume für das anfallende Granulat bilden.

## Patentansprüche

1. Rundlaufendes Schneidwerkzeug (1), insbesondere zum Stranggranulieren von Kunststoffen, mit einem zylindrischen Werkzeugkörper (1), der eine Anzahl in Umfangsrichtung gleichmäßig verteilt angeordneter Klemmeinrichtungen zur Aufnahme von sich im wesentlichen über die axiale Länge des Werkzeugkörpers erstreckenden Schneidelementen (9; 90) enthält, von denen jedes in einer Längsnut (5) der zugeordneten Klemmeinrichtung angeordnet und gegen Klemmflächen im Bereiche der einander gegenüberliegenden Seitenwände (6, 7) der Längsnut (5) durch jeweils eine Spannvorrichtung lösbar verspannt ist, die ein drehbar gelagertes Spannelement (25) mit arretierbaren Exzentermitteln (27, 30, 300) enthält, dadurch gekennzeichnet, daß die Klemmeinrichtungen an in Richtung der Achse des Werkzeugkörpers (1) länglichen Aufnahmeelementen (34) ausgebildet sind, die in den Werkzeugkörper (1) so eingesetzt sind, daß sie an ihren Stirnseiten in Teile des Werkzeugkörpers (1) bildenden Lagermitteln (32) gehalten sind, die axial gegeneinander verspannt sind.

2. Schneidwerkzeug nach Anspruch 1, dadurch gekennzeichnet, daß jedes Spannelement (25) ein drehbar gelagertes Exzenterteil (27) aufweist, das in einer Klemmstellung selbsthemmend mit wenigstens einer Anlagefläche (30,300) an dem jeweiligen Schneidelement (9, 90) oder einem auf dieses einwirkenden Klemmteil (16) verkeilt ist.

3. Schneidwerkzeug nach Anspruch 1 oder 2, dadurch gekennzeichnet, daß die Schneidelemente (9, 90) in den Längsnuten (5) an Klemmflächen (6, 7) formschlüssig abgestützt sind.

4. Schneidwerkzeug nach Anspruch 1, dadurch gekennzeichnet, daß die Lagermittel Lagerplatten (32) oder -armsterne aufweisen, die mit Einrichtungen (4) zur gegenseitigen Verbindung axial nebeneinander angeordneter Werkzeugkörper (1) und/oder mit einer Lagerachse oder Teilen (33) einer solchen versehen sind.

5. Schneidwerkzeug nach einem der vorhergehenden Ansprüche, dadurch gekennzeichnet, daß die Aufnahmeelemente (34) in Gestalt von im Querschnitt zumindest teilweise zylindrischen Aufnahmebolzen ausgebildet sind, von denen jeder eine durchlaufende Längsnut (5) und eine dieser zugeordnete Spannvorrichtung (17, 25) enthält.

6. Schneidwerkzeug nach den Ansprüchen 4 und 5, dadurch gekennzeichnet, daß die Aufnahmebolzen (34) endseitig verdrehsicher in entsprechenden Ausnehmungen (36) der Lagerplatten oder -armsterne (32) gehalten sind.

7. Schneidwerkzeug nach den Ansprüchen 2 und 3, dadurch gekennzeichnet, daß bei jeder Längsnut (5) das Exzenterteil (27) des jeweiligen Spannelements (25) unmittelbar auf eine im Fußbereich des in die Längsnut (5) eingesetzten Schneidelementes (90) angeordnete Anlagefläche (300) einwirkend angeordnet ist.

8. Schneidwerkzeug nach Anspruch 7, dadurch gekennzeichnet, daß jede Längsnut (5) wenigstens auf der in Drehrichtung (130) hinten liegenden Seite eine gegenüber der Radialrichtung geneigte Klemmfläche (6) aufweist, gegen die das Schneidelement (90) durch das jeweilige Spannelement (25) angepreßt ist.

9. Schneidwerkzeug nach Anspruch 8, dadurch gekennzeichnet, daß jede Längsnut (5) radial nach außen zu aufeinander zu weisend geneigte Seitenflächen (6,7) aufweist, denen an dem Schneidelement (90) angeformte, entsprechend geneigte Anlagebereiche (100) zugeordnet sind.

10. Schneidwerkzeug nach einem der Ansprüche 2 bis 6, dadurch gekennzeichnet, daß jede Längsnut (5) auf einer Wandseite über zumindest einen Teil ihrer Länge durch ein die zugeordnete Klemmfläche enthaltendes Klemmteil (16) begrenzt ist, das begrenzt beweglich an dem Aufnahmeelement (34) angeordnet und auf der der Längsnut (5) abgewandten Seite gegen das Exzenterteil (27) des jeweiligen Spannelementes (25) abgestützt ist.

11. Schneidwerkzeug nach Anspruch 10, dadurch gekennzeichnet, daß das Klemmteil (16) an dem Aufnahmeelement (34) über einen elastisch verformbaren Bereich (19) einstückig angeformt ist.

12. Schneidwerkzeug nach Anspruch 10 oder 11, dadurch gekennzeichnet, daß das Klemmteil (16) auf der in Drehrichtung (130) hinten liegenden Seite der jeweiligen Längsnut (5) angeordnet ist.

13. Schneidwerkzeug nach Anspruch 4 oder 5, dadurch gekennzeichnet, daß das Klemmteil (16) einseitig durch eine längsgeschlitzte Bohrung (18) begrenzt ist, in die wenigstens ein Spannelement (25) drehbar eingesetzt ist.

14. Schneidwerkzeug nach einem der vorhergehenden Ansprüche, dadurch gekennzeichnet, daß die Schneidelemente (9) als Wendeschneidelemente mit zumindest zwei nacheinander abarbeitbaren Schneiden (11) ausgebildet sind.

15. Schneidwerkzeug nach einem der vorhergehenden Ansprüche, dadurch gekennzeichnet, daß an dem Aufnahmeelement (34) im Bereiche der Längsnut (5) Anschlagmittel (15) für das jeweils eingesetzte Schneidelement (9, 90) angeordnet sind.

16. Schneidwerkzeug nach einem der Ansprüche 4 bis 7, dadurch gekennzeichnet, daß durch die Lagerplatten oder -armsterne (32) und die Aufnahmeelemente (34) ein käfigartiger Werkzeugkörper ausgebildet ist.

## Claims

1. Rotary cutter tool (1), in particular for pelletizing plastic materials, having a cylindrical tool body (1) comprising a plurality of clamping means distributed evenly in the circumferential direction and serving to receive cutter elements (9; 90) which latter extend substantially over the axial length of the tool body, each of the said elements being arranged in a longitudinal groove (5) of the associated clamping means and being detachably clamped against clamping surfaces in the area of the oppositely arranged side walls (6, 7) of the longitudinal groove (5), by one clamping device each, the latter comprising a rotatably seated clamping element (25) with lockable eccentric means (27, 30, 300), characterized in that the clamping means are formed on receiving elements (34) which are elongated in the direction of the axis of the tool body (1) and which are inserted in the tool body (1) in such a way that their end faces are held in bearing means (32) that are part of the tool body (1) and are mutually clamped in axial direction.

2. Cutter tool according to claim 1, characterized in that each clamping element (25) comprises a rotatably seated eccentric element (27) which, in a clamping position, is keyed in self-locking relationship by at least one contact surface (30,300) with the respective cutter element (9, 90) or with a clamping element (16) acting on the latter.

3. Cutter tool according to claim 1 or 2, characterized in that the cutter elements (9, 90) are positively held in the longitudinal groove (5) by clamping surfaces (6, 7).

4. Cutter tool according to claim 1, characterized in that the bearing means comprise bearing plates (32) or bearing bracket stars provided with means (4) for mutually connecting tool bodies (1) arranged one beside the other in axial direction, and/or with a bearing shaft or parts (33) thereof.

5. Cutter tool according to any of the preceding claims, characterized in that the receiving elements (34) take the form of receiving bolts which exhibit, at least in part, a cylindrical cross-section and each of which is provided with a full-length longitudinal groove (5) and clamping means (17, 25) coacting therewith.

6. Cutter tool according to claims 4 and 5, characterized in that the receiving bolts (34) are retained by their ends against rotation in corresponding recesses (36) provided in the bearing plates or bearing bracket stars (32).

7. Cutter tool according to claims 2 and 3, characterized in that with each longitudinal groove (5) the eccentric element (27) of the respective clamping element (25) is arranged in such a way that it acts directly on a contact surface (300) arranged in the area of the base of the cutter element (90) fitted in the longitudinal groove (5).

8. Cutter tool according to claim 7, characterized in that each longitudinal groove (5) comprises, at least on the rear side viewed in the sense of rotation (130), a clamping surface (6) which is inclined relative to the radial direction and against which the cutter element (90) is urged by the respective clamping element (25).

9. Cutter tool according to claim 8, characterized in that each longitudinal groove (5) comprises lateral surfaces (6, 7) which are inclined toward each other in radially outward direction and which coact with correspondingly inclined contact areas (100) formed integrally with the cutter element (90).

10. Cutter tool according to any of claims 2 to 6, characterized in that each longitudinal groove (5) is limited on one wall side, over at least part of its length, by a clamping element (16) which contains the associated clamping surface and which is mounted on the receiving element (34) for restricted movement and supported, on the side opposite the longitudinal groove (5), on the eccentric element (27) of the respective clamping element (25).

11. Cutter tool according to claim 10, characterized in that the clamping element (16) is integrally formed on the receiving element (34), via an elastically deformable area (19).

12. Cutter tool according to claim 10 or 11, characterized in that the clamping element (16) is arranged on the rear side of the respective longitudinal groove (5), viewed in the sense of rotation (130).

13. Cutter tool according to claim 4 or 5, characterized in that the clamping element (16) is limited on one side by a longitudinally slotted bore (18) in which at least one clamping element (25) is rotatably fitted.

14. Cutter tool according to any of the preceding claims, characterized in that the cutter elements (9) are designed as multiple-edge cutter elements having at least two edges (11) that can be worked off one after the other.

15. Cutter tool according to any of the preceding claims, characterized in that stop means (15) for the cutter element (9, 90) inserted at any time are arranged on the receiving element (34) in the area of the longitudinal groove (5).

16. Cutter tool according to any of claims 4 to 7, characterized in that a cage-like tool body is formed by the bearing plates or bearing bracket stars (32) and the receiving elements (34).

## Revendications

1. Outil de coupe (1) rotatif, notamment pour produire des granulés à partir de boudins de matière plastique, comportant un corps d'outil (1) cylindrique qui contient un certain nombre de dispositifs de serrage uniformément répartis dans la direction périphérique, destinés à recevoir des éléments de coupe (9; 90) qui s'étendent sensiblement sur la longueur axiale du corps d'outil, sont disposés chacun dans une rainure longitudinale (5) du dispositif de serrage concerné et sont serrés, avec possibilité de démontage, contre des surfaces de serrage dans la région des parois latérales (6, 7) en vis-à-vis de la rainure longitudinale (5) au moyen d'un dispositif de serrage qui comprend un élément de serrage (25) monté tournant avec des moyens à excentrique (27, 30, 300) blocables, caractérisé par le fait que les dispositifs de serrage sont agencés sur des éléments récepteurs (34) allongés dans la direction de l'axe du corps d'outil (1) qui sont montés dans le corps d'outil (1) de manière telle qu'ils sont tenus au niveau de leurs faces frontales dans des paliers (32) qui constituent des parties du corps d'outil (1) et sont serrés axialement en direction l'un de l'autre.

2. Outil de coupe selon la revendication 1, caractérisé par le fait que chaque élément de serrage (25) comporte un excentrique (27) monté tournant qui, dans une position de serrage est appliqué de manière autobloquante par au moins une surface d'appui (30, 300) sur l'élément de coupe (9, 90) concerné ou sur une partie de serrage (16) agissant sur celui-ci.

3. Outil de coupe selon la revendication 1 ou 2, caractérisé par le fait que les éléments de coupe (9, 90) prennent appui par complémentarité de forme sur des surfaces de serrage (6, 7) dans les rainures longitudinales (5).

4. Outil de coupe selon la revendication 1, caractérisé par le fait que les paliers comportent des plaques (32) ou des bras en étoile qui sont pourvus de dispositifs (4) permettant de relier mutuellement des corps d'outil (1) disposés côte-à-côte dans la direction axiale et/ou d'un axe de palier ou de parties d'axe (33).

5. Outil de coupe selon l'une des revendications précédentes, caractérisé par le fait que les éléments récepteurs (34) sont agencés sous la forme d'axes de section au moins partiellement cylindriques qui comportent chacun une rainure (5) longitudinale continue et un dispositif de serrage (17, 25) associé à celle-ci.

6. Outil de coupe selon les revendications 4 et 5, caractérisé par le fait que les axes récepteurs (34) sont montés côté extrémité sans possibilité de rotation dans des logements (36) correspondants des plaques ou des bras en étoile (32).

7. Outil de coupe selon les revendications 2 et 3, caractérisé par le fait que dans chaque rainure (5) longitudinale, l'excentrique (27) de l'éléments de serrage (25) concerné est disposé de manière à agir directement sur une surface d'appui (300) disposée dans la région du pied de l'élément de coupe (90) monté dans ladite rainure (5) longitudinale.

8. Outil de coupe selon la revendication 7, caractérisé par le fait que chaque rainure (5) longitudinale présente au moins du côté arrière, vu dans la direction de rotation (130), une surface de serrage (6) inclinée dans la direction radiale, contre laquelle l'élément de coupe (90) est pressé par l'élément de serrage (25) concerné.

9. Outil de coupe selon la revendication 8, caractérisé par le fait que chaque rainure (5) longitudinale présente des surfaces latérales (6, 7) orientées radialement vers l'extérieur et inclinées en direction l'une de l'autre auxquelles sont associées des zones d'appui (100) avec une inclinaison adaptée aménagées sur l'élément de coupe (90).

10. Outil de coupe selon l'une des revendications 2 à 6, caractérisé par le fait que chaque rainure (5) longitudinale, sur un côté de paroi et sur une partie au moins de sa longueur, est limitée par un élément de serrage (16) qui contient la surface de serrage correspondante, est disposé sur l'élément récepteur (34) avec possibilité de déplacement limité et, sur le côté éloigné de la rainure longitudinale (5), prend appui sur l'excentrique (27) de l'élément de serrage (25) concerné.

11. Outil de coupe selon la revendication 10, caractérisé par le fait que l'élément de serrage (16) sur l'élément récepteur (34) est formé d'une pièce par l'intermédiaire d'une zone (19) qui peut se déformer élastiquement.

12. Outil de coupe selon la revendication 10 ou 11, caractérisé par le fait que l'élément de serrage (16) est disposé sur le côté arrière dans la direction de rotation (130) de la rainure (5) longitudinale concernée.

13. Outil de coupe selon la revendication 4 ou 5, caractérisé par le fait que l'élément de serrage (16) est limité d'un côté par un perçage (18) avec une fente longitudinale dans lequel au moins un élément de serrage (25) est monté tournant.

14. Outil de coupe selon l'une des revendications précédentes, caractérisé par le fait que les éléments de coupe (9) sont agencés sous forme d'éléments de coupe amovibles avec au moins deux arêtes (11) de coupe utilisables successivement.

15. Outil de coupe selon l'une des revendications précédentes, caractérisé par le fait que des moyens de butée (15) pour l'élément de coupe (9, 90) monté dans la rainure sont disposés sur l'élément récepteur (34) dans la région de la rainure (5) longitudinale.

16. Outil de coupe selon l'une des revendications 4 à 7, caractérisé par le fait que les plaques ou les bras en étoile (32) et les éléments récepteurs (34) forment un corps d'outil (1) en forme de cage.
